# EUROPÄISCHE PATENTSCHRIFT

(11) **EP 3 144 529 B1**
(45) Veröffentlichungstag und Bekanntmachung des Hinweises auf die Patenterteilung: **15.08.2018**
(21) Anmeldenummer: 16001986.5
(22) Anmeldetag: 13.09.2016
(51) Int. Cl.: F03D 17/00

(54) **WINDENERGIEANLAGE MIT WENIGSTENS EINEM ELASTISCH VERFORMBAREN BAUTEIL UND VERFAHREN ZUR FESTSTELLUNG DES BEGINNS EINER VERSCHLEISSBEDINGTEN BAUTEIL-RESTNUTZUNGSDAUER IN EINER WINDENERGIEANLAGE**
WIND TURBINE WITH AT LEAST ONE ELASTICALLY DEFORMABLE COMPONENT AND METHOD FOR DETECTING THE BEGINNING OF WEAR-RELATED COMPONENT REMAINING LIFE IN A WIND TURBINE
ÉOLIENNE COMPRENANT AU MOINS UN COMPOSANT DÉFORMABLE ELASTIQUEMENT ET PROCÉDÉ DE DÉTERMINATION DU DÉBUT DE LA VIE RÉSIDUELLE D'UN COMPOSANT EN FONCTION DE L'USURE DANS UNE ÉOLIENNE

(30) Priorität: 15.09.2015 DE 102015011761
(43) Veröffentlichungstag der Anmeldung: 22.03.2017
(73) Patentinhaber: Jörn GmbH, 71336 Waiblingen (DE)
(72) Erfinder: Reinke, Kai, 71686 Remseck (DE)
(74) Vertreter: Liebl, Thomas

(56) Entgegenhaltungen:
- EP-A1- 2 299 346
- US-A1- 2011 125 419

## Beschreibung

Die Erfindung betrifft eine Windenergieanlage mit einem Rotor mit wenigstens einem elastisch verformbaren Bauteil als Strukturteil und/oder Lagerteil nach dem Oberbegriff des Anspruchs 1 sowie ein Verfahren zur Feststellung des Beginns einer verschleißbedingten Bauteil-Restnutzungsdauer in einer Windenergieanlage nach dem Oberbegriff des Anspruchs 10.

Windenergie ist eine weltweit verfügbare regenerative Energiequelle, die mit steigender Tendenz zur Stromerzeugung durch Windenergieanlagen an Land (onshore) und auf See (offshore-Windparks) genutzt wird. Windenergieanlagen haben bereits einen hohen technischen Entwicklungsstand, wobei deren sicherer Betrieb bei möglichst geringen Betriebs- und Wartungskosten eine ständige Herausforderung darstellt. Ein Problem ist dabei die Abschätzung der Nutzungsdauer von verformbaren Bauteilen und deren Austausch, da diese Bauteile regelmäßig nur schwer zugänglich sind und/oder durch Augenschein nicht überprüfbar sind.

Bei Windenergieanlagen wirken auf elastisch verformbare Bauteile als Strukturteile und/oder Lagerteile im Betrieb abhängig von wechselnden Windzuständen unterschiedliche Verformungskräfte, die letztendlich zu einem die Bauteilnutzungsdauer begrenzenden Bauteilverschleiß führen. Solche elastisch verformbaren Bauteile sind insbesondere Gummi-Metall-Lager als Wellenlager und/oder Generatorlager und/oder Getriebelager und/oder elastische Kupplungen und/oder eine Gondellagerung und/oder deren Komponenten. Weiter sind dies Strukturteile aus Kunststoff, insbesondere aus Faserverbundwerkstoffen, zum Beispiel Rotorblätter.

Der verwendete Begriff _{"}Gummi-Metall-Lager" ist, wie in Fachkreisen üblich, allgemein zu verstehen und weit auszulegen, wobei "Gummi" als Synonym für "Elastomermaterial" und "Metall" für ein verformungssteifes Lagerbauteil steht, das insbesondere auch aus Kunststoff bestehen kann.

Solche Gummi-Metall-Lager und/oder Kunststoffteile, insbesondere Faserverbundteile sind bekanntlich bei richtiger Auslegung über eine lange Nutzungsdauer auch bei hohen oszillierenden Belastungen funktionssicher und im Prinzip verschleißfrei. Ein Kriterium für die Funktion eines solchen Bauteils ist die Verformung unter Krafteinwirkung bzw. die entsprechende Bauteilsteifigkeit.

An Muster-Bauteilen und an Kontroll-Bauteilen einer Serie wird in bekannter Weise die Bauteilnutzungsdauer auf einem Prüfstand bei klar definierten Verhältnissen gemessen. Dazu wird beispielsweise ein Gummi-Metall-Lager mit oszillierenden Belastungen beaufschlagt. Es werden die Lastwechsel oder sich wiederholende Lastblöcke gezählt und dabei werden Kraft und Verformung gemessen, wobei einer der beiden Werte vorgegeben wird. Daraus wird ein Diagramm als Messkurve erzeugt, in dem eine abfallende Steifigkeit über die Zahl der Lastwechsel erkennbar ist. Die Zahl der Lastwechsel ist unmittelbar als Nutzungsdauer interpretierbar. Aus einem solchen Diagramm ist jeweils im Laufe der Nutzungsdauer eine Zunahme der Verformung entsprechend einem Abfall der Steifigkeit in charakteristischen drei Stufen erkennbar. In der ersten Stufe fällt die Steifigkeit sehr schnell, beispielsweise um zirka 30% ab, was als Fließen und Setzen bezeichnet wird. Anschließend wird über eine vergleichsweise sehr lange Nutzungsdauer nur ein sehr geringer Abfall der Steifigkeit gemessen entsprechend einem Plateauverlauf mit linearem und/oder leichtem Abfall der Steifigkeit. Daran schließt sich ein messbarer vergleichsweise zügiger progressiver Abfall der Steifigkeit an, welcher das nahe Ende der Bauteilfunktion mit einem möglichen Ausfall und damit das Ende der Nutzungsdauer markiert.

Der Grund für dieses messbare Verhalten insbesondere eines Gummi-Metall-Lagers liegt darin, dass bei dauernden hohen oszillierenden Belastungen durch anliegende Kräftemomente oder durch aufgezwungene Verformungen Molekülketten aufreißen, die sich dann wegen der anliegenden Wechsellasten nicht mehr regenerieren können. Insbesondere in der dritten Stufe potenzieren sich diese Vorgänge und es kommt auch zu optisch erkennbaren Rissen und Schäden, die mit einem schnellen Abfall der Bauteilsteifigkeit zu einem beginnenden Ende der Nutzungsfunktion und letztendlich zu einem Ausfall führen. Ausgehend von Messungen der Nutzungsdauer auf einem Prüfstand wird dann mit Sicherheitsabschlägen für fertigungsbedingte Toleranzen und differierende reale Bauteilbelastungen eine Nutzungsdauer für Serienteile im Einbauzustand abgeschätzt und angegeben. Übliche typische Nutzungsdauern entsprechend der ersten und zweiten Stufe des oben genannten Diagramms liegen in der Größenordnung von 6 bis 10 Jahren. Wenn die dritte Diagrammstufe erreicht ist, muss zwar ein Gummi-Metall-Lager zeitnah ausgetauscht werden, kann aber noch über mehrere Wochen, gegebenenfalls Monate bis zu einem Totalausfall weiter verwendet werden.

Ähnlich den vorstehend in Verbindung mit einem Gummi-Metall-Lager erläuterten Steifigkeitsverlauf verhält sich bei entsprechenden Belastungen üblicherweise auch ein Kunststoffteil, insbesondere ein Faserverbundbauteil, bei dem sich durch oszillierende Belastungen und erzwungene Verformungen der Faserverbund lockert und auflöst.

Bei vielen Anwendungen solcher Bauteile kann das beginnende Ende der Nutzungsdauer entsprechend der dritten Diagrammstufe relativ einfach erkannt werden, beispielsweise durch eine veränderte Geräuschentwicklung oder bei einem Fahrzeug durch ein verändertes Fahrverhalten. Bei leicht zugänglichen Einbausituationen kann eine beginnende Schädigung entsprechend der dritten Diagrammstufe gegebenenfalls auch optisch erkannt werden. Da dies bei Windenergieanlagen regelmäßig jedoch nicht möglich ist, kann ein Bauteilschaden zu einem Sicherheitsrisiko und/oder zu teuren Folgeschäden und Betriebsausfällen führen.
Gerade dafür werden bisher relevante Bauteile nach Möglichkeit im Vorfeld getestet und mit gemessenen Belastungsdaten eine maximale Laufzeit festgelegt, nach der sie unter Berücksichtigung einer normalen Streuung und mit Sicherheitsabschlägen meist lange vor einer möglichen Lebensdauer getauscht werden, lange bevor eine Schädigung weit fortgeschritten ist. Eine weitere Entwicklung dieses Prinzips ist aus US2011/0125419 bekannt. Nachteilig muss für einen solchen präventiven Tausch eines Bauteils in regelmäßigen Wartungsintervallen eine Windenergieanlage außer Betrieb gesetzt werden. Um ein Sicherheitsrisiko und Folgeschäden auszuschließen, muss ein Bauteiltausch deutlich vor einer im Mittel möglichen Nutzungsdauer erfolgen. Dies führt zu hohen Ausfall-, Bauteil- und Wartungskosten, die noch nicht durch den aktuellen und noch funktionssicheren Bauteilzustand erforderlich wären. Da in einer Windenergieanlage regelmäßig mehrere solcher Bauteile, beispielsweise Gummi-Metall-Lager verbaut sind, vervielfachen sich die Kosten entsprechend.
Aufgabe der Erfindung ist es, bei einer Windenergieanlage mit wenigstens einem elastisch verformbaren Bauteil als Strukturteil und/oder Lagerteil die mögliche Bauteilnutzungsdauer genauer festzustellen, als dies durch Prüfstandsmessungen und Abschätzungen möglich ist. Eine weitere Aufgabe der Erfindung ist es, ein Verfahren zur Bestimmung des Beginns einer verschleißbedingten Restnutzungsdauer eines elastisch verformbaren Bauteils in einer Windenergieanlage vorzuschlagen.

Die Aufgaben werden mit den Merkmalen der unabhängigen Patentansprüche gelöst. Vorteilhafte Ausgestaltungen sind Gegenstand der darauf rückbezogenen Unteransprüche.

Gemäß Anspruch 1 wird bei einer Windenergieanlage ein sich zeitversetzt wiederholender, jeweils gleicher Windzustand vorbestimmt, dem eine bestimmte, jeweils gleiche Verformungskraft zugeordnet ist. Ein solcher Windzustand wird jeweils beim Auftreten mit einer Erfassungseinheit erkennbar und erfassbar. Vorzugsweise wird ein Windzustand ausgewählt und bestimmt, der relativ häufig mit einer deutlich messbaren Bauteilverformung auftritt, so dass eine relativ große Anzahl von auswertbaren Messergebnissen gewonnen werden kann. Vorzugsweise sollen beim ausgewählten Windzustand Lastniveaus mit relativ hohem Schädigungsanteil, insbesondere andauernde, hohe oszillierende Belastungen am Bauteil auftreten. Dabei wird davon ausgegangen, dass bei weitgehend gleichen Windzuständen und entsprechend gleichen Betriebszuständen der Windenergieanlage die dadurch am Bauteil auftretenden Verformungskräfte ebenfalls weitgehend gleich sind. Grundsätzlich können auch mehrere unterschiedliche Windzustände für mehrere parallele Auswertungen oder für Auswertungen an mehreren in der Windenergieanlage verbauten Bauteilen vorbestimmt werden.

Wenn ein solcher vorbestimmter Windzustand erkannt und erfasst wird, erfolgt durch ein Startsignal die Auslösung eines Messvorgangs, wobei für eine Bauteilüberwachung mit wenigstens einem bauteilzugeordneten Sensor und einer nachgeschalteten Mess- und Auswerteeinheit eine Bauteilverformung als Kenngröße für eine aktuelle Bauteilsteifigkeit gemessen und der Messwert gespeichert wird. Die auf das Bauteil einwirkende Verformungskraft muss hier vorteilhaft nicht absolut gemessen werden. Ebensowenig ist es erforderlich, die Bauteilverformung bzw. deren Kehrwert als Bauteilsteifigkeit absolut zu messen, da bei der weiteren Auswertung nur Relativwerte und tendenzielle Verläufe zwischen aufeinanderfolgenden Messwerten herangezogen werden. Zudem ist es nicht zwingend erforderlich einen Windzustand für das Startsignal und die Messung völlig exakt zu bestimmen. Auch die Vorbestimmung eines engen "Windfensters", das für die Auswertung tendenzieller Verläufe gut verwertbare Ergebnisse liefert, soll hier mitumfasst sein. Eine Messkurve aus den Messwerten ist zum Ausgleich von Messtoleranzen zu mitteln und zu glätten.

Mit einer Vergleichereinheit der Mess- und Auswerteeinheit wird ein Vergleich eines aktuellen Verformungsmesswerts bezüglich vorhergehender gespeicherter Verformungsmesswerte durchgeführt, wobei sich zwei unterschiedliche Ergebnisse zeigen können:
Die über eine relativ lange Nutzungsdauer gespeicherten Verformungsmesswerte bzw. entsprechende Kenngrößen für die Bauteilsteifigkeit sind etwa gleich. Bei der Erstellung der Messkurve ergibt sich ein Plateaubereich mit im Verlauf der langen Nutzungsdauer von üblicherweise mehreren Jahren nur relativ geringem Neigungsanstieg für die Bauteilverformung bzw. Neigungsabfall für die Bauteilsteifigkeit. Bei so einem Vergleichsergebnis ist eine weitere sichere Bauteilfunktion festgestellt. Dieser Plateaubereich entspricht der eingangs erwähnten zweiten Stufe des dort erwähnten Steifigkeitsdiagramms.

Wenn aber über eine gegenüber der Nutzungsdauer des Plateaubereichs relativ kurze Nutzungsdauer von üblicherweise wenigen Tagen/Wochen nacheinander erfasste Verformungsmesswerte sukzessiv und progressiv größer werden, ist der unkritische Plateaubereich deutlich mit einem starken Steigungsanstieg einer Messkurve bezüglich der Bauteilverformung bzw. einem starken Neigungsabfall einer Messkurve bezüglich der Bauteilsteifigkeit verlassen. Wenn ein solcher als Schwellwert vorgebbarer Steigungsanstieg bzw. Neigungsabfall festgestellt wird, ist damit der Beginn einer verschleißbedingten vorgebbaren Bauteil-Restnutzungsdauer festgestellt. Zudem wird eine entsprechende Warninformation, beispielsweise als optisches oder akustisches Signal ausgegeben, die auf einen erforderlichen Bauteilaustausch hinweist. Dieses zweite Ergebnis liegt vor, wenn die dritte Stufe im eingangs beschriebenen Steifigkeitsdiagramm erreicht ist.

Wenn zu Beginn einer Bauteilnutzung über einen gegenüber der Nutzungsdauer des Plateaubereichs relativ kurzen Zeitabstand ein steiler Bereich der Messkurve festgestellt wird, entspricht dies der ersten Stufe im vorstehend erläuterten Steifigkeitsdiagramm. Diese nachlassende Steifigkeit durch Fließen und Setzen zu Beginn der Nutzung ist unkritisch, die entsprechenden Messwerte werden bei der Bewertung für einen Beginn einer Restnutzungsdauer herausgenommen und nicht verwertet.

Kern der Erfindung ist somit eine qualitative Bestimmung der Steifigkeit des verformbaren Bauteils, die im verbauten Zustand in der Windenergieanlage weist nicht unmittelbar kontrollierbar und messbar ist. Nur in Kenntnis einer Kraft und Verformung, wie beispielsweise auf einem Prüfstand, lässt sich die Steifigkeit absolut bestimmen. In einer technischen Anwendung ist es mit vertretbarem Aufwand nicht möglich, die an einem verbauten Bauteil anliegende Kraft zu messen. Wege oder Verformungen hingegen sind relativ einfach in an sich bekannter Weise zu messen. Die Bestimmung der Bauteillebensdauer wird erfindungsgemäß vorteilhaft nur durch einfach durchzuführende Auswertungen von Messwertveränderungen durchgeführt.

Zu unterschiedlichen Zeitpunkten wird dazu jeweils eine Messung der Bauteilverformung ausgelöst. Der Zeitpunkt entsprechend dem Auftreten eines vorbestimmten Windzustands wird so ausgewählt, dass Lastniveaus mit deutlich messbaren Verformungen und bevorzugt mit hohem Schädigungsanteil auftreten. Vorzugsweise wird dabei der Schädigungsanteil durch ein häufiges Auftreten dieses Lastniveaus erreicht und nicht durch hohe Lasten mit geringer Häufigkeit, um eine große Anzahl an Messergebnissen zu gewinnen, deren zwangsläufig auftretende Streuungen somit besser als Streuung und nicht als sich abzeichnender Bauteilschaden bewertbar ist.

Zur Erstellung einer Messkurve werden zweckmäßig auf der X-Achse eines Diagramms die Anzahl der erhaltenen Messwerte aufgetragen, die als Nutzungsdauer interpretierbar sind. Auf der Y-Achse kann die Verformung aufgetragen werden. Optisch verständlicher ist es jedoch deren Kehrwert, eins durch die Verformung, aufzutragen, womit eine Messkurve analog zum Verlauf der Steifigkeit erhalten wird. Damit zeigt sich in einer ersten Stufe zu Beginn der Bauteilnutzungsdauer ein starker Steifigkeitsabfall durch Fließen und Setzen, dem sich in einer zweiten Stufe ein Plateaubereich mit leicht linear abfallender Steifigkeit über die Lebensdauer anschließt, sowie am Ende der Nutzungsdauer in einer dritten Stufe ein stark progressiver Abfall. Für die Auswertung wird als Messkurve eine Gerade ermittelt, die das beschriebene Plateau in ihrem Verlauf gut abbildet, wobei dies bereits nach wenigen Messwerten im Plateaubereich möglich ist. Jeder weitere Messwert wird dahingehend bewertet, wie er die Charakteristik der zuvor ermittelten Geraden verändert oder davon abweicht. Vorzugsweise wird für eine Auswertung eine Veränderung der Steigung diese Gerade als Kriterium herangezogen. Nimmt nach dem Plateaubereich der Betrag der Steigung über mehrere Messwerte deutlich über den Wert der Streuung zu, so beginnt der Bereich des progressiven Steifigkeitsabfalls als Signal zum Austausch des Bauteils. Im Prinzip wird somit das Differenzial der gemittelten Messkurve ausgewertet.

Erfindungsgemäß wird somit vorteilhaft der Verschleißzustand eines verformbaren Bauteils während seiner Bauteilnutzungsdauer unmittelbar und direkt festgestellt. Damit kann ein Bauteil über seine tatsächliche Lebensdauer bis zum Beginn seines progressiven Steifigkeitsabfalls genutzt werden.

Insbesondere können damit durch Nutzungsdauerschätzungen vorgegebene, präventive Austauschmaßnahmen vor dem tatsächlich möglichen Nutzungsende entfallen, wodurch Wartungs- und Betriebskosten eingespart werden. Zudem ist die Bauteilsicherheit durch die direkte Messung am Bauteil erhöht und das Risiko eventueller Folgekosten bei einem nicht erkannten Bauteilausfall ist reduziert.

Der vorbestimmte Windzustand kann einfach als vorbestimmte Windgeschwindigkeit bei quer zum Wind gedrehtem Rotor erfasst werden. Auch eine indirekte Erfassung des Windzustands ist über die Rotordrehzahl möglich. Messsignale für die Windgeschwindigkeit und für die Rotordrehzahl werden in der Windenergieanlage ohnehin generiert und können erfindungsgemäß verwertet werden.

Bei jedem Auftreten eines vorbestimmten Windzustands kann jeweils ein einziger Messvorgang gestartet und durchgeführt werden. Alternativ und/oder zusätzlich kann bei einem langen Anhalten eines solchen Windzustands auch nach einer vorbestimmten Wartezeit jeweils selbsttätig wieder ein weiterer Messvorgang gestartet und durchgeführt werden.

Besonders geeignet für die erfindungsgemäße Überwachung sind die eingangs erwähnten elastisch verformbaren Bauteile einer Windenergieanlage als Gumit-Metalllager und als Strukturteile.

Da eine Bauteilverformung auch temperaturabhängig ist, soll als weitere Bedingung für den Start eines Messvorgangs und/oder für die Verwertung eines Messwerts ein Temperaturfenster von 6°C eingehalten werden, wobei dieses Temperaturfenster in einem Temperaturbereich von 0°C bis 35°C wählbar ist. Dabei wird berücksichtigt, dass Temperatureinflüsse bei Temperaturen unter 0°C und über 35°C zu starken, ungünstigen Messwertschwankungen führen. Der Temperatureinfluss auf die Messwerte in einem Temperaturfenster von 6°C innerhalb des Temperaturbereichs von 0°C bis 35°C ist dagegen für die erfindungsgemäße Auswertung vernachlässigbar.

Sollte ein Messvorgang wegen festgestellter ungünstiger Temperaturen nicht erfolgen oder durchgeführt und/oder nicht verwertet werden, jedoch die übrigen Startbedingungen insbesondere der vorbestimmte Betriebszustand erfüllt sein, wird ein Messwertzähler entsprechend einer Nutzungsdauer dennoch hoch gesetzt, um die Messkurve, insbesondere den Steifigkeitsverlauf nicht zu verzerren.

Ab dem Beginn des progressiven Steifigkeitsabfalls kann regelmäßig eine Weiterbenutzungsdauer als Restlebensdauer des Bauteils von 10% der bisherigen Bauteilnutzungsdauer angenommen werden. Diese Information kann zusätzlich zum Signal für den Austausch des Bauteils gegeben werden.

Konkret kann als Sensor zur Messung der Bauteilverformung eine Sensorik zur Messung einer Verschiebung und/oder einer Geschwindigkeit und/oder einer Beschleunigung verwendet werden. Eine Verformung kann dabei zwischen Bauteilkomponenten und/oder Anbauteilen direkt oder indirekt gemessen werden. Dabei kann die Sensorik in das verformbare Bauteil, insbesondere in ein Elastomer integriert sein und/oder an angrenzenden/benachbarten Anbauteilen angeordnet sein. Beispielsweise kann ein Abstand als Bauteilverformung direkt gemessen werden, indem auf der Innenseite eines Gummi-Metall-Lagers ein Signalgeber sitzt und auf der Außenseite ein Aufnehmer. Es ist auch möglich, bei den Elementen die Beschleunigungen zu messen, zweimal zu integrieren und zu addieren, so dass der Relativweg erhalten wird. Je nach den Gegebenheiten können an sich bekannte einfache induktive Wegaufnehmer, magnetoresistive Sensoren, Hallsonden, Beschleunigungssensoren oder andere Sensoren verwendet werden, mit der eine Verschiebung, eine Geschwindigkeit, eine Beschleunigung oder ein anderes verschiebungsäquivalentes Signal gemessen werden kann.

Zweckmäßig werden die Erfassungseinheit und die Mess- und Auswerteeinheit mit ihren Komponenten in eine meist in der Windenergieanlage vorhandene Zentralelektronik voll- oder teilintegriert, wobei gegebenenfalls ohnehin für andere Zwecke vorhandene Messwerte, beispielsweise Windgeschwindigkeitsmesswerte oder Rotordrehzahlmesswerte mitverwertet werden können.

Zusammenfassend zeigen sich die Vorteile der Erfindung besonders bei einer Windenergieanlage als Windrad zur Stromerzeugung, da hier eingesetzte Wellenlager, Generatorlager, Getriebelager, elastische Kupplungen oder Gondellager meist nicht einfach in Augenschein genommen werden können und nur schwierig auszutauschen sind, so dass es sich jedenfalls lohnt, die erfindungsgemäß mögliche volle Nutzungsdauer auszunützen und keinen präventiven vorgezogenen Lageraustausch durchzuführen. Entsprechend ist die Situation bei Strukturteilen aus Kunststoff, insbesondere aus Faserverbundwerkstoffen, die ebenfalls erfindungsgemäß hinsichtlich ihres Nutzungsendes überwacht werden können, insbesondere können vorteilhaft die Rotorblätter überwacht werden.

Die Aufgabe der Erfindung wird hinsichtlich des Verfahrens mit den Merkmalen des Anspruchs 10 gelöst.

Anhand einer Zeichnung wird die Erfindung weiter erläutert.

Es zeigen:
- Fig. 1: eine schematische Darstellung einer Windenergieanlage mit Komponenten zur Erzeugung eines Startimpulses für einen Messvorgang,
- Fig. 2: ein Ablaufdiagramm für die erfindungsgemäße Bestimmung des Beginns einer verschleißbedingten Restnutzungsdauer, und
- Fig. 3: ein typisches Diagramm einer Messkurve.

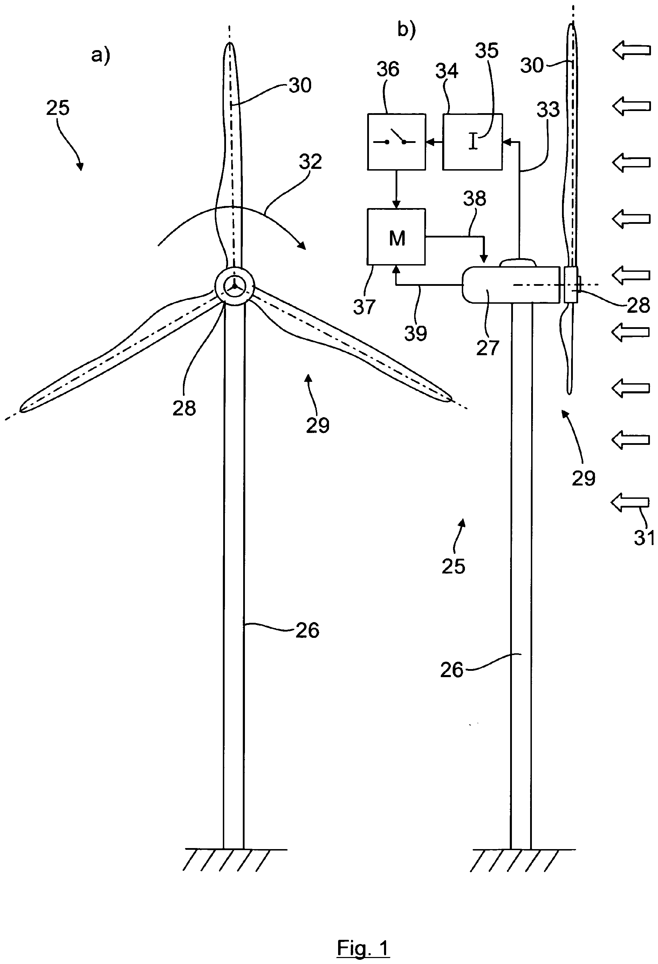

In Fig. 1 ist schematisch eine Windenergieanlage 25 dargestellt mit Fig. 1a in einer Frontansicht und mit Fig. 1b in einer Seitenansicht. Auf einem Ständer 26 ist eine vertikal drehbare Gondel 27 angeordnet mit einer horizontal ausgerichteten Nabe 28 für einen Rotor 29 mit drei Rotorblättern 30.

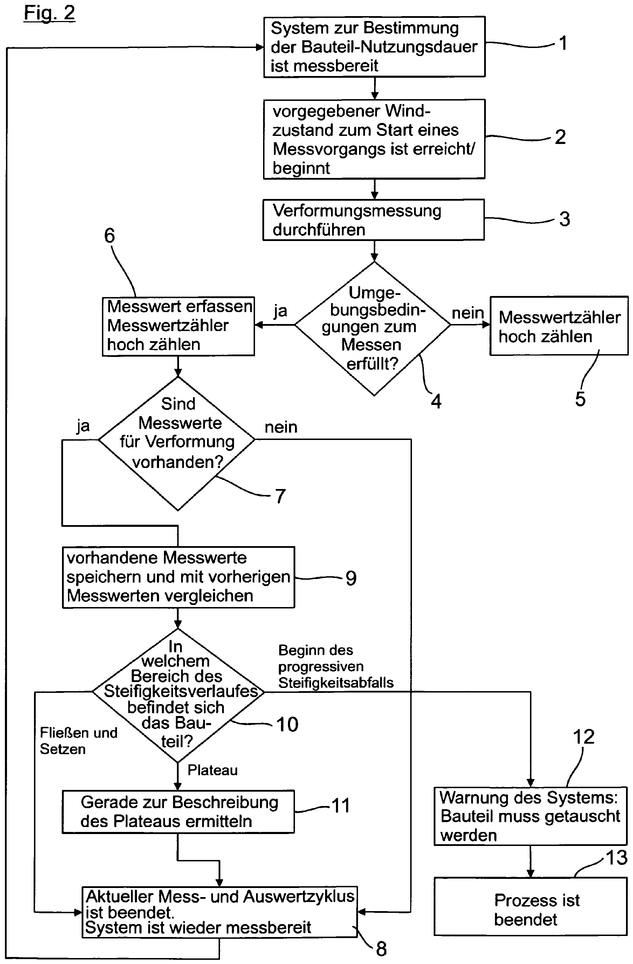

In Fig. 1b ist zudem mit Windpfeilen 31 die Windrichtung mit einer bestimmten Windgeschwindigkeit eingezeichnet. Die Gondel 27 ist bereits gesteuert in den Wind gedreht bzw. der Rotor 29 quer zum Wind ausgerichtet, wodurch der Rotor 29 drehangetrieben rotiert (Pfeil 32). Zudem ist schematisch die Erzeugung eines Startimpulses für einen Messvorgang angegeben:
Ein Windgeschwindigkeitssignal wird mit einer Steuerleitung 33 einem Vergleichermodul 34 zugeführt, in dem ein Windfenster 35 definiert ist. Wird das Windfenster 35 von der festgestellten Windgeschwindigkeit erreicht, erzeugt eine Schalteinheit einen Triggerimpuls als Startimpuls für eine Verformungsmessung an einem Bauteil durch die Mess- und Auswerteeinheit 37 (Steuerleitung 38). Erfasste Messwerte werden über die Messleitungen 39 der Mess- und Auswerteeinheit 37 zugeführt und entsprechend dem Ablaufdiagramm nach Fig. 2 verarbeitet.

In Fig. 2 ist die Prozessabfolge anhand von Status/Prozess-Rechtecken und Entscheidungsrauten dargestellt:
Gemäß dem ersten Rechteck 1 ist das System zur Bestimmung der Bauteilnutzungsdauer messbereit. Als Bauteil wird hier beispielhaft ein Gummi-Metall-Lager der Windenergieanlage im verbauten Zustand angenommen.

Gemäß der beiden nachfolgenden Rechtecke 2 und 3 wird ein vorgegebener Betriebszustand zum Start eines Messvorgangs erreicht, worauf der Befehl zur Durchführung einer Verformungsmessung gegeben wird.

Ein solches Triggersignal für einen Messstart wird entsprechend Fig. 1 ausgegeben, wenn die vorgegebene Windgeschwindigkeit erreicht und eine Gondel der Anlage in den Wind ausgerichtet ist.

In der Entscheidungsraute 4 wird zudem überprüft, ob ein vorgegebenes Temperaturfenster bei der Messung erfüllt ist. Je nach Anwendungsfall können gegebenenfalls auch weitere Randbedingungen vorgegeben werden, beispielsweise eine Rotordrehzahl als Indikator, dass die Anlage nicht stillgesetzt ist.

Sind die Umgebungsbedingungen/Randbedingungen zum Messen nicht erfüllt, wird der Messwertzähler dennoch hochgezählt, um dadurch sonst gegebene Verzerrungen der Messkurve weitgehend zu reduzieren (Rechteck 5).

Sind die Umgebungsbedingungen/Randbedingungen zum Messen erfüllt, wird ein Messwert erfasst und der Messwertzähler hochgezählt (Rechteck 6).

In der folgenden Entscheidungsraute 7 wird festgestellt, ob Werte für die Verformung vorhanden sind, ist dies nicht der Fall, wird der aktuelle Mess- und Auswertezyklus beendet.

Sind Messwerte vorhanden, werden diese gespeichert und mit vorhergehenden Messwerten verglichen (Rechteck 9).

Anschließend wird dieser Vergleich ausgewertet (Entscheidungsraute 10) und festgestellt in welchem Bereich des Steifigkeitsverlaufs sich das Bauteil befindet. Ein typischer Steifigkeitsverlauf ist nachfolgend anhand des Diagramms der Fig. 2 dargestellt und erläutert.

Wenn der erste Bereich 16 mit relativ schnell abfallender Steifigkeit zum Nutzungsbeginn, der durch Fließen und Setzen des Elastomermaterials hervorgerufen wird, festgestellt wird, ist dies kein Hinweis auf den Beginn eines baldigen Nutzungsendes, so dass der aktuelle Mess- und Auswertezyklus beendet wird (Rechteck 8).

Wird ein Steifigkeitsverlauf dergestalt ermittelt, dass der zweite Bereich 17 als Plateaubereich durch die aktuelle Messung weitergeführt ist, wird die Gerade zur Beschreibung des Plateaubereichs weitergeführt (Rechteck 11). Auch dies ist kein Hinweis auf den Beginn eines Nutzungsendes, so dass auch für diesen Fall der aktuelle Mess- und Auswertezyklus beendet wird (Rechteck 8).

Wird dagegen anschließend an einen Plateaubereich in einem dritten Bereich 19 des Steifigkeitsverlaufs ein progressiver Steifigkeitsabfall bei der Auswertung festgestellt, gibt das System eine Warnung aus, dass das überwachte Bauteil getauscht werden muss (Rechteck 12). Mit dieser Warnung bezüglich des überwachten Bauteils wird der Prozess beendet (Rechteck 13).

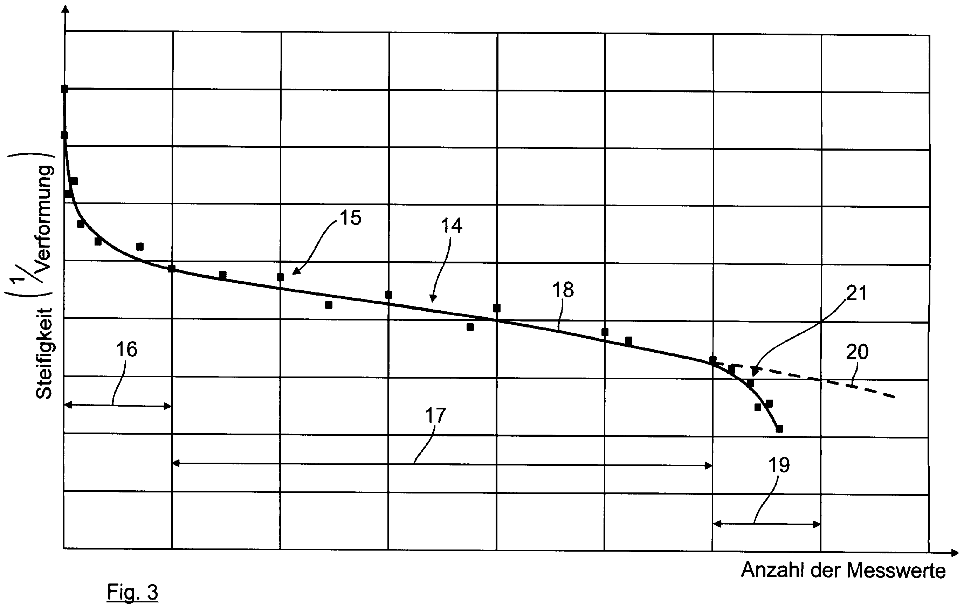

In Fig. 3 ist in einem Diagramm eine typische Messkurve 14 für eine Bauteilnutzung eines elastisch verformbaren Bauteils, hier beispielhaft für ein Gummi-Metall-Lager der Windenergieanlage bei aufeinanderfolgenden innerhalb geringer Grenzen gleichen und zeitlich versetzt auftretenden Belastungen dargestellt.

Dazu ist nach oben auf der Y-Achse die jeweils ermittelte Kenngröße für die Steifigkeit als 1 geteilt durch Verformung aufgetragen. Auf der X-Achse des Diagramms ist die Anzahl der Messwerte aufgetragen, die als Nutzungsdauer interpretierbar ist, wobei mit gleichen Abständen für jeden vorbestimmten Windzustand ein dazu vorhandener Messwert im Diagramm als Messpunkt 15 eingezeichnet ist.

Durch nicht genau exakt erfassbare Windzustände und Messtoleranzen streuen ersichtlich die Messpunkte 15 jedoch in nur geringem und für die zu treffende Aussage bezüglich der Nutzungsdauer unbedeutendem Umfang. Bei der Auswertung wird daher eine Interpolation vorgenommen mit folgendem Ergebnis:
Im ersten Steifigkeitsbereich 16 fällt die Steifigkeit durch Fließen und Setzen relativ schnell ab. Im zweiten Steifigkeitsbereich 17, der durch eine Gerade 18 durch Ausmittelung der Messwertstreuung angegeben werden kann, ist ein Plateaubereich durch einen nur sehr geringen Steifigkeitsabfall gekennzeichnet. Im Diagramm ist dieser Steifigkeitsbereich zur besseren Verdeutlichung mit einer relativ großen Neigung der Geraden 18 dargestellt. Zudem ist tatsächlich der zweite Steifigkeitsbereich 17 als Plateaubereich im Vergleich zum ersten und dritten Steifigkeitsbereich 16, 19 wesentlich größer/länger mit vielen Messwerten 15 und hier zur besseren Verdeutlichung des prinzipiellen Verlaufs der Messkurve verkürzt dargestellt. Anschließend an den Plateaubereich 17 wird im dritten Steifigkeitsbereich 19 ein schneller progressiver Steifigkeitsabfall festgestellt als Hinweis für einen bald erforderlichen Austausch des Bauteils entsprechend dem Rechteck 12 aus Fig. 1. Dieser progressive Steifigkeitsabfall als deutliche Abweichung von der Verlängerung 20 der Geraden 18 ist bereits kurz nach seinem Beginn (beispielsweise mit Messwert 21) schnell und einfach feststellbar.

## Patentansprüche

1. Windenergieanlage mit einem Rotor und mit wenigstens einem elastisch verformbaren Bauteil als Strukturteil und/oder Lagerteil, auf das im Betriebsverlauf von wechselnden Windzuständen abhängige, unterschiedliche Verformungskräfte einwirken, die zu einem die Bauteilnutzungsdauer begrenzenden Bauteilverschleiß führen,
**dadurch gekennzeichnet,**
**dass** ein sich zeitversetzt wiederholender, jeweils gleicher Windzustand vorbestimmt wird, dem eine bestimmte, jeweils gleiche Verformungskraft zugeordnet ist, und ein solcher Windzustand mit einer Erfassungseinheit (33, 34, 35) erkennbar und erfassbar ist,
**dass** bei Erkennung und Erfassung eines solchen vorbestimmten Windzustands (2) selbsttätig ein Messvorgang durch ein Startsignal gestartet und durchgeführt wird (3), wobei für eine Bauteilüberwachung mit wenigstens einem bauteilzugeordneten Sensor und einer nachgeschalteten Mess- und Auswerteeinheit (37) eine Bauteilverformung als Kenngröße für eine aktuelle Bauteilsteifigkeit gemessen und der Messwert gespeichert wird,
**dass** mit einer Vergleichereinheit der Mess- und Auswerteeinheit (37) ein Vergleich eines aktuellen Verformungsmesswerts bezüglich vorhergehender, gespeicherter Verformungsmesswerte durchgeführt wird (9) mit dem Ergebnis,
**dass** die über eine relativ lange Nutzungsdauer gespeicherten Verformungsmesswerte, bzw. entsprechende Kenngrößen für die Bauteilsteifigkeit etwa gleich sind und eine aus den Messwerten gebildete Messkurve (14) einen Plateaubereich (17) mit im Verlauf dieser Nutzungsdauer geringem Neigungsanstieg für die Bauteilverformung bzw. geringem Neigungsabfall für die Bauteilsteifigkeit bildet, womit eine weitere sichere Bauteilfunktion festgestellt ist, oder
**dass** alternativ über eine gegenüber der Nutzungsdauer des Plateaubereichs kurze Nutzungsdauer nacheinander erfasste Verformungsmesswerte sukzessiv und progressiv größer werden, so dass der Plateaubereich mit einem gegenüber dem Plateaubereich stärkeren Steigungsanstieg einer Messkurve bezüglich der Bauteilverformung bzw. einem gegenüber der Neigung des Plateaubereichs stärkeren Neigungsabfall einer Messkurve (14) bezüglich der Bauteilsteifigkeit verlassen ist (19), wodurch der Beginn einer verschleißbedingen vorgebbaren Bauteil-Restnutzungsdauer festgestellt und eine entsprechende Warninformation ausgegeben wird (12), insbesondere beim Erreichen eines als Schwellwert vorgegebenen Steigungsanstiegs bzw. Neigungsabfalls der Messkurve (14).

2. Windenergieanlage nach Anspruch 1, **dadurch gekennzeichnet, dass** ein zu Beginn einer Bauteilnutzung erfasster ansteigender oder abfallender Bereich (16) der Messkurve (14), bei der Auswertung für den Beginn einer Restnutzungsdauer nicht herangezogen wird.

3. Windenergieanlage nach Anspruch 1 oder 2, **dadurch gekennzeichnet, dass** der vorbestimmte Windzustand direkt als vorbestimmte Windgeschwindigkeit (33) bei quer zum Wind gedrehten Rotor (29) erfasst wird und/oder indirekt als vorbestimmte Rotordrehzahl bei quer zum Wind gedrehten Rotor (29) erfasst wird.

4. Windenergieanlage nach einem der Ansprüche 1 bis 3, **dadurch gekennzeichnet, dass** für den Fall, dass nach dem Start und der Durchführung eines Messvorgangs der für den Start erfasste Windzustand (33) für eine vorbestimmte Zeitdauer anhält, wird nach einer vorbestimmten Wartezeit jeweils selbsttätig ein weiterer Messvorgang gestartet und durchgeführt, ansonsten wird jeweils beim Auftreten eines solchen Windzustands ein einziger Messvorgang gestartet und durchgeführt.

5. Windenergieanlage nach einem der Ansprüche 1 bis 4, **dadurch gekennzeichnet, dass** ein überwachtes elastisches Bauteil ein Gummi-Metall-Lager, insbesondere als Wellenlager und/oder Generatorlager und/oder Getriebelager und/oder elastische Kupplungen und/oder ein Lager für eine Gondel und/oder deren Komponenten ist, und/oder
dass ein überwachtes elastisches Bauteil ein Strukturteil aus Kunststoff, insbesondere aus Faserverbundwerkstoffen, insbesondere ein Rotorblatt eines Rotors ist.

6. Windenergieanlage nach einem der Ansprüche 1 bis 5, **dadurch gekennzeichnet,**
**dass** die Umgebungstemperatur um das Bauteil mit einer Temperaturmesseinheit erfasst wird und der Start eines Messvorgangs und/oder die Verwertung eines Messwerts nur freigegeben wird (4), wenn die Umgebungstemperatur für jeden Messvorgang in einem vorgebbaren jeweils gleichen Temperaturfenster, vorzugsweise in einem Temperaturbereich von 6°C liegt, wobei das Temperaturfenster in einem Temperaturbereich von 0°C bis 35°C wählbar ist, und
**dass** beim Vorliegen der übrigen Startbedingungen ein Messwertzähler dennoch hochgesetzt (5) wird, wenn nur die Temperaturbedingung und gegebenenfalls weitere vorgebbare Randbedingungen zur Freigabe nicht erfüllt sind.

7. Windenergieanlage nach einem der Ansprüche 1 bis 6, **dadurch gekennzeichnet, dass** die bisherige Bauteilnutzungsdauer bis zur Abgabe einer Warninformation erfasst wird und mit der Warninformation eine Information zur möglichen unkritischen Weiterbenutzung bzw. bis zu einem zwingend erforderlichen Bauteilaustausch mit einer Weiterbenutzungsdauer als Restlebensdauer von 10% der bisherigen Bauteilnutzungsdauer gegeben wird.

8. Windenergieanlage nach einem der Ansprüche 1 bis 7, **dadurch gekennzeichnet,**
**dass** als Sensor zur Messung der Bauteilverformung eine Sensorik zur Messung einer Verschiebung und/oder einer Geschwindigkeit und/oder einer Beschleunigung verwendet wird, womit eine Verformung als Verschiebung zwischen Bauteilkomponenten und/oder Anbauteilen direkt oder indirekt messbar ist, und
**dass** die Sensorik zumindest teilweise in das verformbare Bauteil integriert und/oder an angrenzenden/benachbarten Anbauteilen angeordnet ist.

9. Windenergieanlage nach einem der Ansprüche 1 bis 8, **dadurch gekennzeichnet, dass** die Erfassungseinheit und die Mess- und Auswerteeinheit mit ihren Komponenten in eine Zentralelektronik der Windenergieanlage voll- oder teilintegriert sind.

10. Verfahren zur Bestimmung des Beginns einer verschleißbedingten Restnutzungsdauer eines elastisch verformbaren Bauteils als Strukturteil und/oder Lagerteil einer Windenergieanlage, **gekennzeichnet durch** die Merkmale eines der Ansprüche 1 bis 9.

## Claims

1. Wind turbine with a rotor and with at least one elastically deformable component as a structural part and/or bearing part, which is acted on in the course of operation by varying deformation forces, which depend on changing wind conditions and lead to component wear that limits the lifetime of the component,
**characterized**
**in that** a wind condition that recurs at time intervals and is the same in each case is predetermined and is assigned a specific deformation force that is the same in each case, and such a wind condition can be detected and can be recorded by a recording unit (33, 34, 35),
**in that**, with the detection and recording of such a predetermined wind condition (2), a measuring operation is automatically started by a starting signal and carried out (3), wherein, for component monitoring, a component deformation is measured as a characteristic variable for a current component stiffness by at least one component-assigned sensor and a downstream measuring and evaluation unit (37) and the measured value is stored,
**in that**, with a comparator unit of the measuring and evaluation unit (37), a comparison of a current measured deformation value is carried out with respect to previous, stored measured deformation values (9) with the result
that the measured deformation values stored over a relatively long time of use, or corresponding characteristic variables for the component stiffness, are approximately the same and a measurement curve (14) formed from the measured values forms a plateau region (17) with, in the course of this time of use, a small slope incline for the component deformation and a small slope decline for the component stiffness, whereby further dependable functioning of the component is established, or
**in that**, alternatively, measured deformation values recorded one after the other over a short time of use in comparison with the time of use of the plateau region become successively and progressively greater, so that the plateau region is left with a stronger ascending incline, in comparison with the plateau region, of a measurement curve with respect to the component deformation and a stronger slope decline, in comparison with the slope of the plateau region, of a measurement curve (14) with respect to the component stiffness (19), whereby the beginning of a wear-related predeterminable remaining component life is established and corresponding warning information is output (12), in particular after reaching an ascending incline or slope decline of the measurement curve (14) that is prescribed as a threshold value.

2. Wind turbine according to Claim 1, **characterized in that** an ascending or descending region (16) of the measurement curve (14) recorded at the beginning of the lifetime of a component is not used in the evaluation for the beginning of a remaining life.

3. Wind turbine according to Claim 1 or 2, **characterized in that** the predetermined wind condition is recorded directly as a predetermined wind speed (33) with the rotor (29) turned transversely to the wind and/or is recorded indirectly as a predetermined rotor speed with the rotor (29) turned transversely to the wind.

4. Wind turbine according to one of Claims 1 to 3, **characterized in that**, in the event that after starting and carrying out a measuring operation, the wind condition (33) recorded for the start stops for a predetermined time period, after a predetermined waiting time a further measuring operation is in each case automatically started and carried out, otherwise a single measuring operation is started and carried out in each case when such a wind condition occurs.

5. Wind turbine according to one of Claims 1 to 4, **characterized in that** a monitored elastic component is a rubber-metal bearing, in particular as a shaft bearing and/or generator bearing and/or gear bearing and/or elastic couplings and/or a bearing for a nacelle and/or the elements thereof and/or
**in that** a monitored elastic component is a structural part of plastic, in particular of fibre-composite plastics, in particular a rotor blade of a rotor.

6. Wind turbine according to one of claims 1 to 5, **characterized**
**in that** the ambient temperature around the component is recorded by a temperature measuring unit and the start of a measuring operation and/or the evaluation of a measured value is only approved (4) if the ambient temperature for each measuring operation lies in a temperature window that can be prescribed and is the same in each case, preferably in a temperature range of 6°C, wherein the temperature window can be chosen in a temperature range from 0°C to 35°C, and
**in that**, if only the temperature condition and possibly further boundary conditions that can be prescribed for approval are not satisfied, a measured value counter is nevertheless incremented (5) if the other starting conditions are met.

7. Wind turbine according to one of Claims 1 to 6, **characterized in that** the time of use so far of a component, up until the issuing of warning information, is recorded and the warning information is accompanied by information on possible uncritical further use or up until an absolutely necessary exchange of the component, with a further time of use given as a remaining life of 10% of the time of use of the component so far.

8. Wind turbine according to one of Claims 1 to 7, **characterized**
**in that** a sensor system for measuring a displacement and/or a speed and/or an acceleration is used as the sensor for measuring the component deformation, whereby a deformation can be measured directly or indirectly as a displacement between component elements and/or attachment parts, and
**in that** the sensor system is at least partially integrated in the deformable component and/or is arranged on adjacent/neighbouring attachment parts.

9. Wind turbine according to one of Claims 1 to 8, **characterized in that** the recording unit and the measuring and evaluation unit are fully or partially integrated with their elements in a central electronic system of the wind turbine.

10. Method for determining the beginning of a wear-related remaining life of an elastically deformable component as a structural part and/or bearing part of a wind turbine, **characterized by** the features of one of Claims 1 to 9.

## Revendications

1. Éolienne comprenant un rotor et au moins un composant déformable élastiquement en tant que pièce structurelle et/ou pièce de palier, sur lequel agissent des forces de déformation différentes dépendant de conditions du vent variables pendant le fonctionnement, lesquelles forces entraînent une usure du composant limitant la durée de vie utile du composant,
**caractérisée**
**en ce qu'**une résistance du vent se reproduisant de manière différée, à chaque fois identique, est prédéterminée, à laquelle est associée une force de déformation déterminée, à chaque fois identique, et une telle résistance du vent peut être reconnue et détectée avec une unité de détection (33, 34, 35),
**en ce qu'**à la reconnaissance et à la détection d'une telle condition du vent prédéterminée (2), une opération de mesure est amorcée et effectuée (3) automatiquement par un signal de démarrage, et pour une surveillance du composant, une déformation du composant en tant que grandeur caractéristique d'une rigidité actuelle du composant étant mesurée avec au moins un capteur associé au composant et avec une unité de mesure et d'analyse (37) montée en aval et la valeur de mesures étant mémorisée,
**en ce qu'**avec une unité de comparaison de l'unité de mesure et d'analyse (37), une comparaison d'une valeur de mesure de déformation actuelle par rapport à des valeurs de mesure de déformation précédentes mémorisées est effectuée (9) avec pour résultat
que les valeurs de mesure de déformation mémorisées pendant une durée d'utilisation relativement longue, ou des grandeurs caractéristiques correspondantes de la rigidité du composant, sont approximativement identiques et une courbe de mesure (14) formée à partir des valeurs de mesure forme une zone de plateau (17) avec une faible augmentation d'inclinaison au cours de cette durée d'utilisation pour la déformation du composant, ou avec une faible diminution d'inclinaison pour la rigidité du composant, avec quoi l'on peut établir un fonctionnement des composants encore plus sûr, ou
qu'en variante, sur une durée d'utilisation courte par rapport à la durée d'utilisation de la zone de plateau, des valeurs de mesure de déformation détectées les unes après les autres deviennent successivement et progressivement plus grandes de telle sorte que l'on quitte (19) la zone de plateau avec une augmentation de la pente, plus forte par rapport à la zone de plateau, d'une courbe de mesure relative à la déformation du composant ou avec une diminution de l'inclinaison, plus forte par rapport à l'inclinaison de la zone de plateau, d'une courbe de mesure (14) relative à la rigidité du composant, de sorte que le début d'une durée de vie utile restante du composant, prédéfinissable et dépendant de l'usure, soit établi et qu'une information d'avertissement correspondante soit émise (12), en particulier dès qu'une augmentation de la pente ou qu'une diminution de l'inclinaison de la courbe de mesure (14), prédéfinie en tant que valeur de seuil, est atteinte.

2. Éolienne selon la revendication 1, **caractérisée en ce qu'**une zone (16) montante ou descendante de la courbe de mesure (14), détectée au début d'une utilisation du composant, n'est pas utilisée lors de l'analyse pour le début d'une durée de vie utile restante.

3. Éolienne selon la revendication 1 ou 2, **caractérisée en ce que** la condition du vent prédéterminée est détectée directement en tant que vitesse du vent prédéterminée (33) lorsque le rotor (29) tourne transversalement au vent et/ou est détectée indirectement en tant que vitesse de rotation du rotor prédéterminée lorsque le rotor tourne transversalement au vent (29).

4. Éolienne selon l'une quelconque des revendications 1 à 3, **caractérisée en ce qu'**au cas où, après le démarrage et la mise en oeuvre d'une opération de mesure, la condition du vent (33) détectée pour le démarrage s'interrompt pendant une durée prédéterminée, après un temps d'attente prédéterminé, une opération de mesure supplémentaire est à chaque fois automatiquement commencée et effectuée, sinon à chaque fois en présence d'une telle condition du vent, une seule opération de mesure est commencée et effectuée.

5. Éolienne selon l'une quelconque des revendications 1 à 4, **caractérisée en ce qu'**un composant élastique surveillé est un palier en caoutchouc-métal, en particulier en tant que palier d'arbre et/ou palier de générateur et/ou palier de transmission et/ou des accouplements élastiques et/ou un palier pour une nacelle et/ou ses composants, et/ou
**en ce qu'**un composant élastique surveillé est une pièce structurelle en plastique, en particulier en matériaux composites renforcés par des fibres, en particulier une pale de rotor d'un rotor.

6. Éolienne selon l'une quelconque des revendications 1 à 5, **caractérisée en ce que**
la température ambiante autour du composant est détectée avec une unité de mesure de température et le début d'une opération de mesure et/ou l'exploitation d'une valeur de mesure est seulement lancée (4) lorsque la température ambiante pour chaque opération de mesure est située dans une fenêtre de température prédéfinissable à chaque fois identique, de préférence dans une plage de température de 6° C, la fenêtre de température pouvant être sélectionnée dans une plage de températures de 0° C à 35° C, et
**en ce qu'**en présence des autres conditions de démarrage, un compteur de valeurs de mesure est toutefois mis à la valeur maximale (5) lorsque seulement la condition de température et éventuellement d'autres conditions marginales prédéfinissables ne sont pas satisfaites pour le lancement.

7. Éolienne selon l'une quelconque des revendications 1 à 6, **caractérisée en ce que** la durée de vie utile antérieure du composant est détectée jusqu'à l'émission d'une information d'avertissement et avec l'information d'avertissement, est fournie une information d'une utilisation supplémentaire possible non critique ou jusqu'à un remplacement du composant obligatoirement nécessaire avec une durée d'utilisation supplémentaire en tant que durée de vie restante de 10 % de la durée de vie utile antérieure du composant.

8. Éolienne selon l'une quelconque des revendications 1 à 7, **caractérisée en ce que**
l'on utilise en tant que capteur pour la mesure de la déformation du composant un système de capteurs pour la mesure d'un déplacement et/ou d'une vitesse et/ou d'une accélération, avec lequel une déformation peut être mesurée directement ou indirectement sous forme de déplacement entre des composants constitutifs et/ou des pièces rapportées, et
**en ce que** le système de capteurs est intégré au moins en partie dans le composant déformable et/ou est disposé sur des pièces rapportées adjacentes/voisines.

9. Éolienne selon l'une quelconque des revendications 1 à 8, **caractérisée en ce que** l'unité de détection et l'unité de mesure et d'analyse sont complètement ou partiellement intégrées avec leurs composants dans une électronique centrale de l'éolienne.

10. Procédé pour déterminer le début d'une durée de vie utile restante, dépendant de l'usure, d'un composant déformable élastiquement en tant que pièce structurelle et/ou pièce de palier d'une éolienne, **caractérisé par** les caractéristiques de l'une quelconque des revendications 1 à 9.
